# EUROPEAN PATENT SPECIFICATION

(11) **EP 4 170 396 B1**
(45) Date of publication and mention of the grant of the patent: **07.01.2026**
(21) Application number: 22202558.7
(22) Date of filing: 19.10.2022
(51) Int. Cl.: G02B 6/25, G02B 6/255, G02B 6/38

(54) **LASER POLISHING OF AN OPTICAL FIBER WITH CONTROL OF END FACE SHAPE OF OPTICAL FIBER**
LASERPOLIEREN EINER OPTISCHEN FASER MIT STEUERUNG DER ENDFLÄCHENFORM DER OPTISCHEN FASER
POLISSAGE AU LASER D'UNE FIBRE OPTIQUE AVEC CONTRÔLE DE LA FORME DE LA FACE D'EXTRÉMITÉ D'UNE FIBRE OPTIQUE

(30) Priority: 20.10.2021 US 202163257619 P
(43) Date of publication of application: 26.04.2023
(73) Proprietor: Corning Research & Development Corporation, Corning, New York 14831 (US)
(72) Inventor: BAUCO, Anthony Sebastian, Horseheads, 14845 (US); CARBERRY, Joel Patrick, Big Flats, 14814 (US); TAGLIAMONTI, Vincent Matteo, Painted Post, 14870 (US); YUAN, Lei, Painted Post, 14870 (US)
(74) Representative: Reddie & Grose LLP

(56) References cited:
- US-A- 5 226 101
- US-A1- 2016 187 592
- US-A1- 2018 335 580
- SOHN IK-BU ET AL: "Performance analysis of CO2laser polished angled ribbon fiber", OPTICAL FIBER TECHNOLOGY, vol. 33, 18 November 2016 (2016-11-18), pages 77 - 82, XP029853750, ISSN: 1068-5200, DOI: 10.1016/J.YOFTE.2016.11.009

## Description

### PRIORITY APPLICATION

This application claims the benefit of priority of U.S. Provisional Application No. 63/257,619, filed on October 20, 2021.

### FIELD OF THE DISCLOSURE

This disclosure relates generally to processing an optical fiber with a laser polishing apparatus and more particularly, to polishing an optical fiber with a laser polishing apparatus where the laser polishing apparatus operating parameters enables shaping of the optical fiber end face.

### BACKGROUND OF THE DISCLOSURE

Optical fibers are useful in a wide variety of applications, including the telecommunications industry for voice, video, and data transmissions. In a telecommunications system that uses optical fibers, there are typically many locations where fiber optic cables that carry the optical fibers connect to equipment or other fiber optic cables. To conveniently provide these connections, fiber optic connectors are often provided on the ends of fiber optic cables. The process of terminating individual optical fibers from a fiber optic cable is referred to as "connectorization." Connectorization can be done in a factory, resulting in a "pre-connectorized" or "pre-terminated" fiber optic cable, or the field (e.g., using a "fieldinstallable" fiber optic connector).

A costly and time consuming step in processing and connectorizing optical fibers is mechanically polishing the fiber end face. In some automated processes, there are several polishing steps needed to produce end faces of sufficient quality and low mating loss. This polishing method can leave debris at each step and a final cleaning step is needed to ensure cleanliness of the end face. To mechanically polish, the optical fiber is first inserted into and bonded to or held in a ferrule. Then, the optical fiber is mechanically polished. Alternatively, by using laser polishing, the mechanical polishing can be eliminated and the polishing of the optical fiber can be completed prior to inserting and bonding in the ferrule. Historically, laser polishing has been used as a cost and processing time saver.

As such, improvements in laser processing are desired to continue to reduce cost and processing time.

In US2016/187592, laser polishing is achieved by directing laser beam perpendicular at the fiber end face in a connectorized optical fiber having a metal ferrule. The spot size of the laser beam is larger than the bare optical fiber diameter, providing a more uniform spatial distribution of the radiation energy over the fiber end face. The metal ferrule provides heat conduction to prevent excessive heat built up at the fiber tip, which would lead to undesirable surface defects and geometries. The connectorized optical fiber may be pre-shaped prior to laser polishing. Subsequent laser polishing flattens the fiber end face.

US2018/335580 discloses a fabrication method for a fiber optic connector. The fiber optic connector includes polymeric material arranged within a front end portion of at least one internal bore of a ferrule. At least a portion of the polymeric material extends from a terminal end of at least one optical fiber to at least a front end of the ferrule. A polymeric material end face serving as a conduit for transmitting optical signals to and/or from the at least one optical fiber. Waveguiding regions may be incorporated in polymeric material assemblies. Polymeric material may be printed, dispensed, or otherwise applied over the terminal end of the at least one optical fiber in the at least one internal bore, and subsequently cured. Polymeric material arranged over (e.g., in contact with) the terminal end of an optical fiber may reduce or eliminate the need for fiber end face polishing, and creates physical contact through an optical interface without exerting undue mechanical stresses on the optical fiber.

US5226101 discloses a method for polishing fiber optic connectors. After a light waveguide distal end is mechanically ground and/or polished, the distal end is slightly melted in order to reduce reflectance. Melting may be induced by a laser, microtorch, or electric arc.

### SUMMARY OF THE DISCLOSURE

The invention is defined in the independent claim to which reference should now be made. Advantageous features are set forth in the dependent claims.

An aspect of the invention provides a method of laser polishing an optical fiber having an end face. The method comprises: placing an optical fiber onto a stage within a laser polishing apparatus, the laser polishing apparatus comprising: a laser; a focusing lens having a focus; and a connector comprising the optical fiber and a ferrule housing the optical fiber; wherein the end face of the optical fiber is spaced from the focusing lens by a distance to space the end face from the focus such that the laser beam has a beam diameter, wherein the beam diameter and the optical fiber diameter have a ratio ranging between 1:1 and 10:1; protruding the optical fiber from the ferrule; emitting a laser beam from a laser onto the optical fiber to provide a laser treatment onto the end face of the optical fiber; and retracting at least a portion of the optical fiber into the ferrule, wherein the laser beam has a laser fluence ranging between 1 J/cm2 and 200 J/cm2, and a duty cycle ranging between 5% and 95%, and the laser is a CO2 laser with wavelength of 9.3 microns, and the laser has an exposure time ranging between 1 microsecond and 1 second, and wherein the end face has a radius of curvature ranging between 100 microns and 10 mm after undergoing the laser treatment.

In the method, the laser beam may have a laser fluence ranging between 10 J/cm2 and 200 J/cm2.

In the method, emitting the laser beam may comprise emitting the laser beam in a burst period, wherein the burst period has a frequency ranging between 1 Hz and 200 kHz.

Additional features and advantages will be set out in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand claims.

### BRIEF DESCRIPTION OF THE DRAWINGS

The accompanying drawings are included to provide a further understanding, and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
FIG. 1 is a schematic of an example laser polishing apparatus;
FIG. 1A is a schematic of an alternate laser polishing apparatus of FIG. 1; and
FIG. 1B is a schematic of an alternate laser polishing apparatus of FIG. 1;
FIG. 2 is a schematic illustrating various pulse examples of the laser polishing apparatus of FIG. 1;
FIG. 2A is a graph illustrating measured center to edge height of an optical fiber as a function of laser fluence;
FIGS. 3A and 3B are side views of an optical fiber assembly illustrating the optical fiber assembly prior to treatment by the laser polishing apparatus of FIG. 1 and after treatment by the laser polishing apparatus of FIG. 1, respectively;
FIG. 4 relates to Example 1 and is a top view and surface profile graph of an example end face of an optical fiber laser polished by the laser polishing apparatus of FIG. 1;
FIG. 4A is a graph illustrating the radius of curvature of an optical fiber treated by the laser polishing apparatus of FIG. 1 as a function of center to edge fiber height;
FIGS. 5A-5D relate to Example 2 and are top views and surface profile graphs of example end faces of optical fibers after end face treatment where FIG. 5A is cleaved by a mechanical cleaver without laser polishing and where FIGS. 5B-5D are mechanically cleaved and then polished by the laser polishing apparatus of FIG. 1 where duty cycle and laser fluence are varied to alter a shape of the end face;
FIGS. 6A-6D relate to Example 2 and are top views and surface profile graphs of example end faces of optical fibers polished by the laser polishing apparatus of FIG. 1 where duty cycle and laser fluence are varied to alter a shape of the end face;
FIGS. 7A-7F relate to Example 3 and are side views of an optical fiber assembly illustrating the optical fiber assembly after treatment by the laser polishing apparatus of FIG. 1 where duty cycle and laser fluence are varied to alter a shape of the end face;
FIG. 8 relates to Example 4 and is a graph illustrating optical fiber height profiles of optical fibers polished by the laser polishing apparatus of FIG. 1 as a function of laser fluence;
FIG. 9 relates to Example 5 and is a graph illustrating optical fiber height profiles of optical fibers polished by the laser polishing apparatus of FIG. 1 as a function of laser fluence and exposure time;
FIGS. 10A and 10B relate to Example 5 and show a microscopic image of a damaged optical fiber end face and a side view of the damaged optical fiber end face after treatment by the laser polishing apparatus of FIG. 1, respectively;
FIG. 11 relates to Example 6 and is a graph of an optical fiber height profile after treatment by the laser polishing apparatus of FIG. 1 under particular laser fluence and exposure time conditions;
FIG. 12 is a cross sectional view of an optical fiber assembly undergoing treatment by the laser polishing apparatus of FIG. 1 where the optical fiber assembly is coupled to a stage that can move an optical fiber of the optical fiber assembly after treatment by the laser polishing apparatus of FIG. 1.

### DETAILED DESCRIPTION

Various embodiments will be clarified by examples in the description below. In general, the present disclosure relates to a laser polishing apparatus where the laser beam emitted by the laser polishing apparatus can be configured to control the shape of the optical fiber end face. Stated another way, the laser polishing apparatus parameters can be adjusted such that the laser beam emitted can polish the optical fiber end face into a particular shape.

In this disclosure, the term "optical fiber" (or "fiber") will be used in a generic sense and may encompass bare optical fibers, coated optical fibers, buffered optical fibers, optical fiber ribbons, a planar array of coated optical fibers, or a ribbonized array of coated optical fibers as well as optical fibers including different sections corresponding to these fiber types, unless it is clear from the context which of the types is intended. "Bare optical fibers" (including "bare glass optical fibers") or "bare sections" are those with no coating present on the fiber cladding. "Coated optical fibers" or "coated sections" include a single or multi-layer coating (typically an acrylate material) surrounding the fiber cladding and have a nominal (i.e., stated) diameter that is typically no greater than twice the nominal diameter of the bare optical fiber. "Buffered optical fibers" or "buffered sections" are coated optical fibers with an additional buffer that increases the nominal diameter of the optical fiber to more than twice the nominal diameter of the bare optical fiber, with 900 µm being the most typical nominal diameter. Buffered optical fibers may also be referred to as "buffered cables." Finally, the term "unbuffered optical fibers" refers to optical fibers without a buffer, and therefore may encompass either bare optical fibers, coated optical fibers or coated optical fibers which have a pigmented outer coating layer.

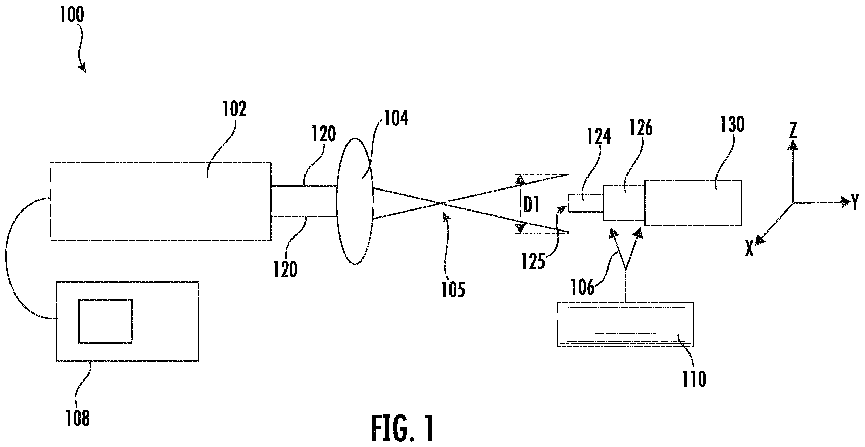

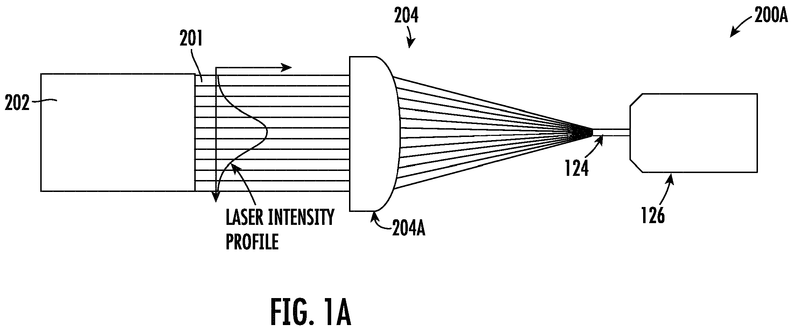

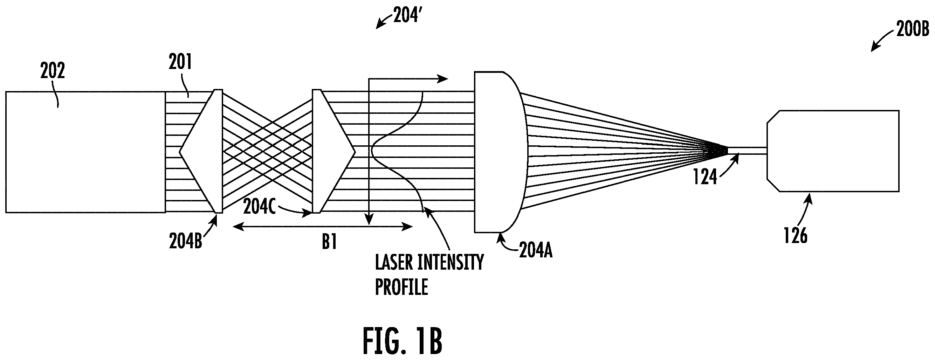

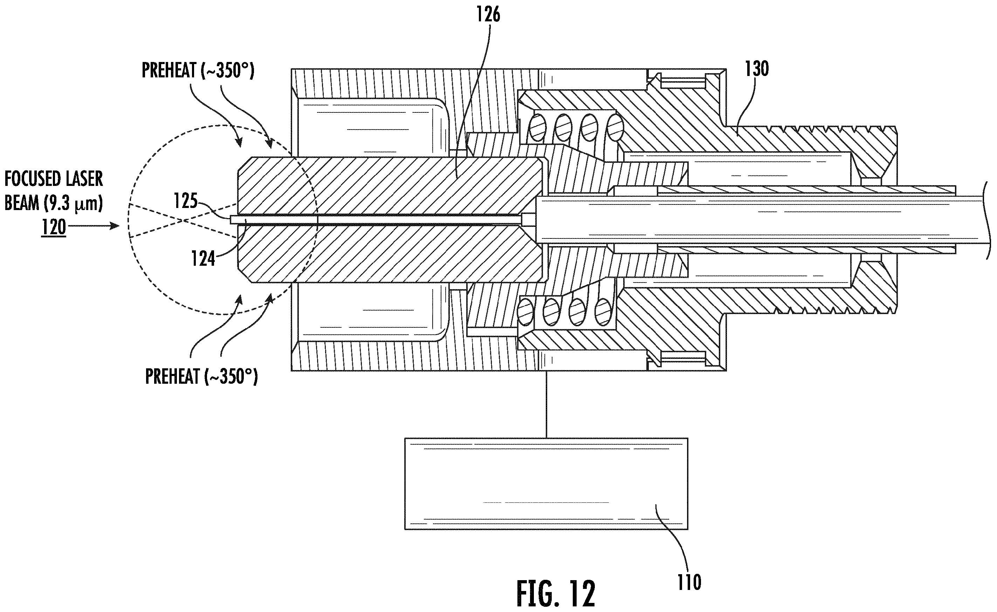

Referring to FIG. 1, a laser polishing apparatus 100 is shown. Laser polishing apparatus 100 is configured to polish the cleaved end of an optical fiber or an array of optical fibers 124 with coated or ribbonized regions that are secured into stage 110 (FIG. 12) as discussed below. In particular, as discussed in greater detail herein, laser polishing apparatus 100 applies a laser beam(s) 120 to polish and shape an end face 125 of optical fiber 124. In one embodiment, optical fiber(s) 124 have core and cladding diameters of about 9.0 and 125 µm, respectively. However, it is contemplated that alternate optical fibers with alternate core and cladding dimensions may be used in the context of the present disclosure.

Polishing apparatus 100 includes a laser 102, a focusing lens 104, and a V-groove 106 coupled to a stage 110. As shown in FIG. 1, laser 102 emits a laser beam(s) 120 in the y-direction of the Cartesian coordinate system as defined in the Figure. In the embodiments according to the claimed invention, laser 102 is a CO2 laser. However, it is contemplated that in alternate embodiments, not forming part of the claimed invention, a different suitable type of laser may be used, such as continuous wave (CW), quasi-continuous wave lasers (QCW), quantum cascade lasers (QCL), or the like, for example. As shown in FIG. 1, a waveform generator 108 is coupled to laser 102 and configured to adjust and control the parameters of laser beam 120 as discussed below.

Laser beam(s) 120 are configured to polish and shape end face 125 of optical fiber 124 by varying the parameters of laser beam(s) 120. In particular, laser beam(s) 120 are applied onto end face 125 of optical fiber 124 such that portions of end face 125 melt and evaporate, while boiling of the end face is avoided. The amount of end face 125 that is melted is limited to prevent core diffusion, mushrooming, or sagging of the core and/or cladding of optical fiber 124. As discussed in greater detail below, the parameters (e.g., laser fluence, duty cycle, wavelengths, intensity, etc.) are controlled to control the shape of the end face 125 and avoid core diffusion, mushrooming, or sagging.

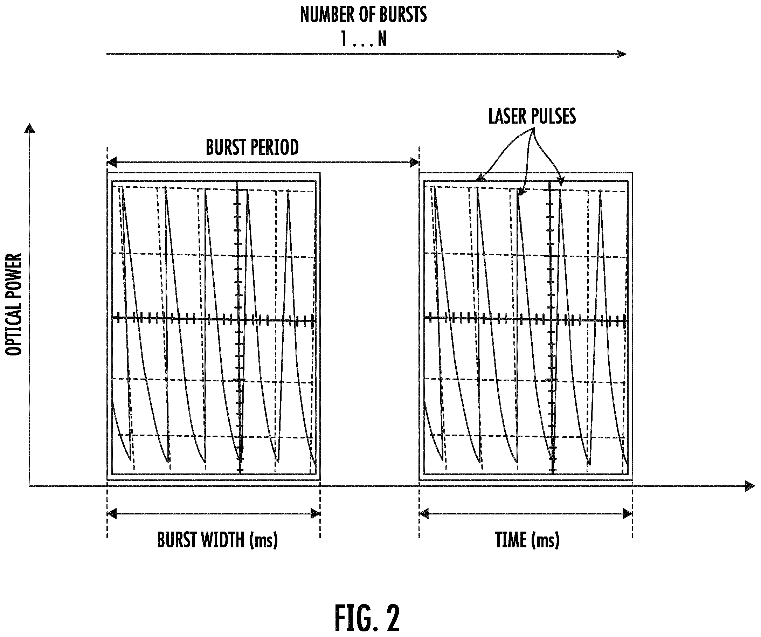

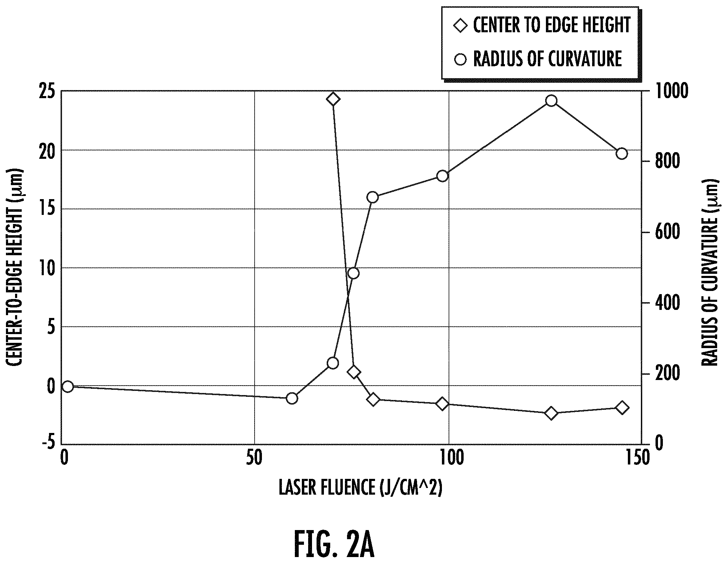

In some embodiments, laser 102 emits laser beam(s) 120 at a wavelength in the range of 1.5 microns to 11 microns or 2 microns to 10 microns. In some embodiments, laser beam 120 has a wavelength ranging between 9 microns to 11 microns. In the embodiments according to the claimed invention, laser beam 120 has a wavelength of 9.3 microns. In some embodiments, laser beam(s) 120 emit laser pulses in a burst that has a burst width (i.e., the duration of each burst) as controlled by waveform generator 108. In some embodiments, a bust has a burst width ranging between 1 microsecond and 1 second or between 100 microseconds and 100 milliseconds. A burst period (i.e., time between the beginning of each burst) as shown in FIG. 2 may be set by waveform generator 108. In some embodiments, a burst period has a frequency that may be selected in a frequency range ranging between 1 Hz and 200 kHz. As mentioned previously, a graphical representation of a burst period and corresponding laser beam 120 emissions within the burst period are shown in FIG. 2.

In some embodiments, laser 102 emits laser beam 120 at a repetition rate ranging between 0 kilohertz (kHz) and 200 kHz. In some embodiments, laser 102 emits laser beam 120 at an output power of up to about 100 Watts (W).

Laser 102 emits laser beam(s) 120 having a laser fluence value (hereinafter referred to as "laser fluence"). Laser fluence is a numerical value that represents radiant energy received by a surface per unit area. Referring briefly to FIG. 2A, a graphical representation of the relationship between laser fluence and radius of curvature of end face 125 is shown. As shown, a higher laser fluence of laser beam 120 can produce an end face 125 of optical fiber 124 with a smaller radius of curvature, and a lower laser fluence can produce an end face 125 of optical fiber 124 with a larger radius of curvature. Stated another way, laser fluence of laser beam(s) 120 can be varied to control the shape (i.e., radius of curvature) of end face 125. In some embodiments, laser 102 emits laser beam(s) 120 having a laser fluence ranging between 1 J/cm² and 200 J/cm², between 10 J/cm² and 200 J/cm², or between 20 J/cm² and 200 J/cm². In some embodiments, laser fluence ranges between 20 J/cm² and 150 J/cm². In some embodiments, laser 102 and laser polishing apparatus 100 operate at a duty cycle ranging between 5% and 95%, 10% and 80%, between 15% and 80%, or between 20% and 80%. In some embodiments, the exposure time is varied to produce the desired shape of end face 125 of optical fiber 124. In some embodiments, laser 102 has an exposure time ranging between 1 microsecond to 1 second or between 100 microseconds and 100 milliseconds. Further, in some embodiments, the exposure time can be varied while keeping the duty cycle constant (or vice versa) to produce the desired shape of end face 125 of optical fiber 124.

As mentioned previously, laser beam 120 passes through a focusing lens 104. Focusing lens 104 is configured to reflect laser beam 120 in a different direction than the direction when emitted by laser 102. Stated another way, focusing lens 104 is configured to redirect laser beam(s) 120 onto end face 125 of optical fiber 124. As shown, focusing lens 104 directs laser beam 120 such that laser beam(s) 120 cross at a focus 105 of focusing lens 104 that is spaced from end face 125 of optical fiber 124 by a distance as shown in FIG. 1. In some embodiments, focusing lens 104 comprises multiple lenses or optics as discussed in greater detail below. Also, focusing lens 104 is configured to alter a beam diameter D1 of laser beam(s) 120 as shown in FIG. 1. As used herein, beam diameter refers to the diameter of a laser beam incident upon end face 125 after passing through focusing lens 104. In some embodiments, laser beam(s) 120 has a beam diameter of at least 125 microns. In some embodiments, laser beam(s) 120 has a beam diameter ratio to optical fiber diameter ranging between 1:1 and 10:1, between 2:1 and 5:1, or between 3:1 and 5:1.

Referring now to FIGS. 1A and 1B, alternate laser polishing apparatuses 200A and 200B are shown. In general, laser polishing apparatuses 200A, 200B are configured to direct laser beams onto optical fiber 124 extending from a ferrule 126 as shown. It is contemplated that laser polishing apparatuses 200A, 200B can be used on optical fiber 124 prior to insertion into ferrule 126.

Referring first to FIG. 1A, laser polishing apparatus 200A includes a laser 202 and lens apparatus 204. Laser 202 is configured to emit laser beam(s) 201 to polish optical fiber(s) 124. In the embodiments according to the claimed invention, laser 202 is a CO2 laser. In embodiments not forming part of the claimed invention, laser 202 is a collimated pulsed or CW IR, mid IR, CO or an ultrafast laser. However, alternate suitable lasers may be used. Similar to embodiments, described above, in some embodiments, laser 202 emits laser beam 201 at wavelengths ranging between 1.5 microns to 11 microns or 2 microns to 10 microns. In one embodiment, laser beam 201 has a wavelength ranging between 9 microns and 11 microns. In the embodiments according to the claimed invention, laser beam 120 has a wavelength of about 9.3 microns. In some embodiments, laser 202 emits laser beam 201 in pulses in a burst that has burst width and burst period ranges as described above with laser polishing apparatus 100. In some embodiments, laser 202 emits laser beam 201 at a repetition rate having a similar range as described above with respect to laser polishing apparatus 100. In some embodiments, laser 202 emits laser beam 201 at an output power range as described above with respect to laser polishing apparatus 100. In some embodiments, laser fluence values, exposure time, and duty cycles of laser beam 201 has similar ranges as those described above with respect to laser polishing apparatus 100.

As shown in FIG. 1A, laser beam 201 passes through lens apparatus 204 after laser beam 201 is emitted from laser 202. Lens apparatus 204 includes an aspheric lens 204A. Aspheric lens 204A is configured to converge laser beam 201 onto optical fiber 50, and aspheric lens maintains laser intensity profile of laser beam 201 as shown. That is, the intensity of laser beam 201 is near the center of laser beam 201 with lesser intensity extending outwardly from the center. In some embodiments, lens 204A has alternate spatial configurations with either laser 202 or optical fiber 124 to alter the laser intensity profile of laser beam 201. Laser beam 201 upon passing through aspheric lens 204A is focused onto optical fiber 124 with a greater laser intensity at the center of laser beam 201. In some embodiments, optical fiber 124 can be moved or spaced from lens apparatus 204 such that end face of optical fiber 124 is at the focus of lens apparatus 204 (i.e., aspheric lens 204A). To that end, in some embodiments, optical fiber 124 can also be moved or spaced from lens apparatus 204 such that end face of optical fiber 124 is spaced from the focus of lens apparatus 204 (i.e., aspheric lens 204A) similar to the spatial configuration shown with respect to laser apparatus 100. Such spatial arrangement combinations enable creation of various laser beam intensity profiles to be applied onto optical fiber 124.

Referring now to FIG. 1B, laser polishing apparatus 200B is shown. Laser polishing apparatus 200B has similar components as laser polishing apparatus 200A and such similar components are given the same reference number. The differences between laser polishing apparatus 200B and laser polishing apparatus 200A are noted below. Lens apparatus 204' includes an aspheric lens 204A and axicon lenses 204B, 204C spaced from aspheric lens 204A. As mentioned previously, aspheric lens 204A is configured to converge laser beam 201 onto optical fiber 124. Axicon lenses 204B, 204C are configured to invert a laser beam intensity profile and diverge laser beam 201. In addition, axicon lenses 204B, 204C can be translated along direction B1 to vary the laser beam intensity profile and the spatial configuration of laser beams 201 with respect to optical fiber 124 as shown and described with respect to laser polishing apparatus 100. That is, optical fiber 124 can be within the focus of lens apparatus 204' or spaced from the focus of lens apparatus 204' as described above. Such spatial arrangement combinations enable creation of various laser beam intensity profiles to be applied onto optical fiber 124.

As shown, by inverting the laser beam intensity profile, there is less power at the center of laser beam 201 with greater power extending outwardly from the center of laser beam 201. In this way, laser beam 201 as applied onto a cladding of optical fiber 124 can have a greater intensity applied onto portions of the cladding that are radially distanced from a core-cladding interface with a lesser intensity laser beam 201 applied onto a portion of the cladding that are closer to a core-cladding interface.

Spacing connector 130 from focusing lens 104 or lens apparatuses 204, 204' has advantages. One advantage is that the size of laser beam(s) 120 (i.e., beam diameter) can be controlled by placing optical fiber 124 outside of focus 105, and as such, the intensity and fluence of laser beam(s) 120 as applied onto end face 125 of optical fiber 124 can also be controlled. For example, the beam diameter D1 of laser beam(s) 120 can be increased in this spatial arrangement, which thereby reduces the intensity of laser beam(s) 120 as applied onto optical fiber 124. This, in turn, reduces the risk of cracking/creating imperfections onto end face 125 of optical fiber 124 during laser processing/polishing. Also, by positioning optical fiber 124 and ferrule 126 away from focusing lens 104 as shown, the risk of damage/creation of imperfections onto ferrule 126 during laser processing is reduced.

As mentioned previously, laser polishing apparatus 100 includes laser beam(s) 120 that are applied onto an optical fiber connector 130 (hereinafter referred to as "connector 130") that is coupled to a stage 110. Connector 130 comprises optical fiber 124 and a ferrule 126 that houses optical fiber 124. Connector 130 is held in place by a V-groove 106 that is coupled to stage 110 (FIG. 12). While a V-groove is shown in FIG. 1, it is within the scope of the present disclosure that alternate physical structures may be used to hold connector 130 in place and maintain the spatial relationship between optical fiber 124 and focusing lens 104.

Referring briefly to FIG. 12 and as mentioned previously, connector 130 is coupled to stage 110 via V-groove 106. Stage 110 is configured to adjust the positioning of optical fiber 124 in relation to ferrule 126 within connector 130. Stage 110 is a multi-axis stage and is operably connected to a driver and a computer. Computer and driver operate to move stage 110 along the x-axis and the y-axis during operation of polishing apparatus 100 in order to polish optical fiber 124. In one embodiment, stage 110 has a resolution of about 50 nm.

To operate apparatus 100, a connector 130 with optical fiber 124 and ferrule 126 is placed within V-groove 106 and onto stage 110. Connector 130 is pre-heated as shown in FIG. 12 to expand a bore of ferrule 126 such that optical fiber 124 can be inserted into bore of ferrule 126. Then, laser 102 is activated to emit laser beam 120. Laser beam(s) 120 is emitted from laser 102 and travels throughout apparatus 100 as shown in FIG. 1 (i.e., passing through focusing lens(es) 104) such that laser beam(s) 120 illuminates optical fiber 124 to shape end face 125 of optical fiber. In some embodiments, end face 125 of optical fiber 124 is a cleaved end face (i.e., optical fiber 124 has been cleaved prior to laser treatment by laser polishing apparatus 100); however, optical fibers 124 that have not been previously cleaved can be treated by laser polishing apparatus 100.

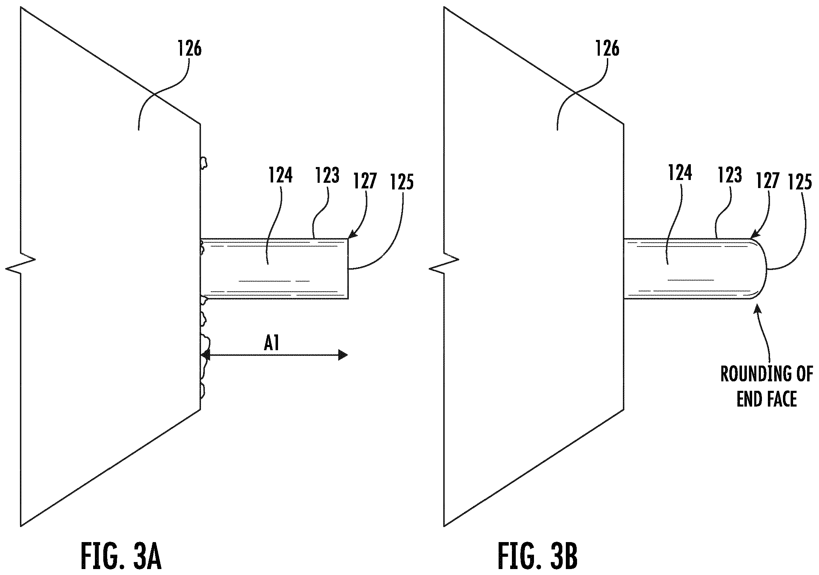

Referring now to FIGS. 3A and 3B, images of an optical fiber 124 within a ferrule 126 of connector 130 prior to laser treatment by laser polishing apparatus 100 and after laser treatment by laser polishing apparatus 100, respectively, are shown. As shown, optical fiber 124 protrudes from ferrule 126 when undergoing laser treatment. In some embodiments, optical fiber 124 protrudes from ferrule 126 at a distance A1 ranging between 200 microns and 300 microns. However, other distances A1 can be used. Referring now to FIG. 3B, in comparison with FIG. 3A, after laser treatment by polishing apparatus 100, end face 125 of optical fiber 124 is rounded to a spherical shape. Also, ferrule end face of ferrule 126 is cleaned of debris, which is an advantage of the laser processing treatment described herein. Then, in some embodiments, after laser treatment, optical fiber 124 is retracted into ferrule 126 by stage 110. In addition, fiber edges 123 of optical fiber 124 are rounded at an interface 127 of end face 125 and fiber edges 123 after laser treatment as shown. Stated another way, fiber edges 123 of optical fiber 124 that contact end face 125 of optical fiber 124 are rounded and have a radius of curvature (as measured by a laser confocal microscope) at interface 127 after laser treatment described herein. Furthermore, after laser treatment, glass of end face 125 has a fictive temperature greater than glass of optical fiber 124 at a depth of 10 mm into optical fiber 124 from end face 125.

Treatment of optical fiber 124 by laser polishing apparatus 100 enables control of the radius of curvature of optical fiber 124. In particular, in some embodiments, after laser treatment by laser polishing apparatus 100, optical fiber 124 has a radius of curvature ranging between 100 microns and 10 mm.

### Examples

### Example 1

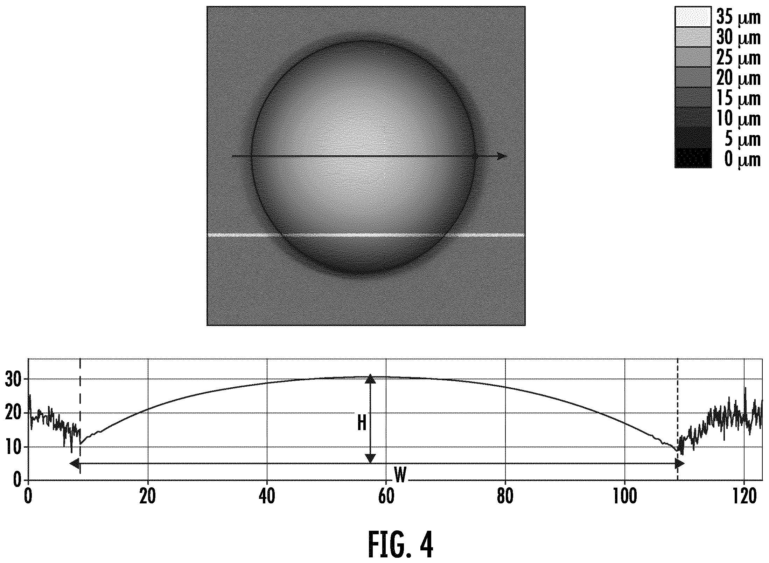

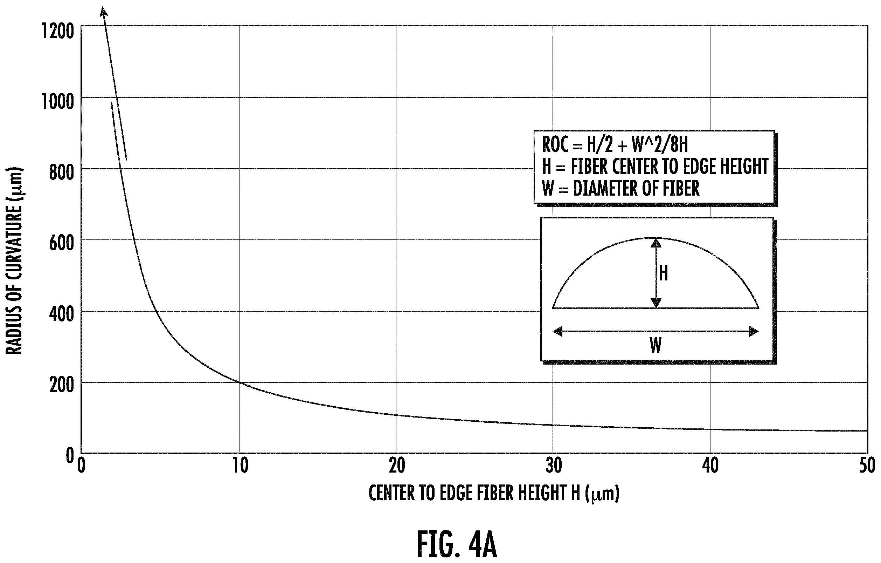

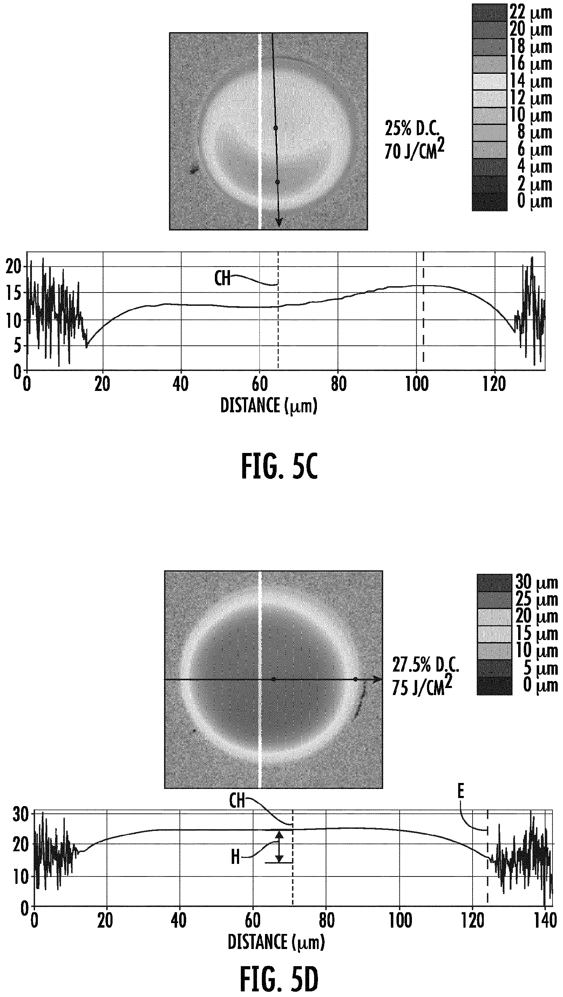

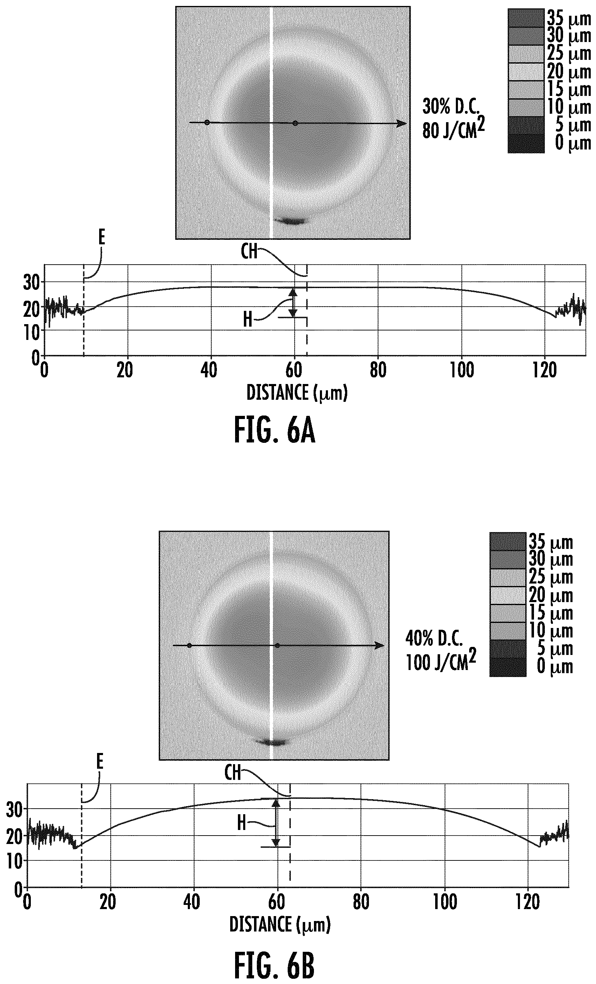

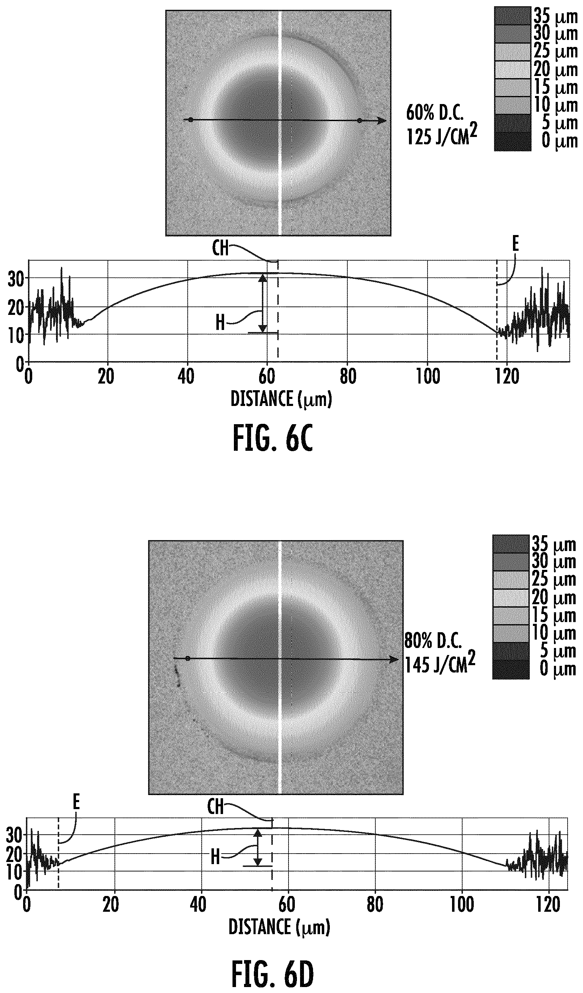

Referring first to FIG. 4, a one and two dimensional image of an optical fiber post laser treatment by laser polishing apparatus is shown. In particular, the optical fiber was treated under the following laser beam conditions: wavelength of 9.3 microns, a pulse/burst width of 50 microseconds, a repetition rate/frequency of 5 kHz, a duty cycle of 40%, a number of bursts of 200 bursts, and an exposure time of 10 milliseconds. As shown in FIG. 4, the graph illustrates a height profile of the optical fiber where the core of the optical fiber is above the cladding of the optical fiber by a distance or height H for a width of the optical fiber as measured by a confocal microscope. Stated another way, distance H represents a center to edge height of the optical fiber where the height H is determined as the difference between a center height CH of the optical fiber and an edge height E of the optical fiber as annotated in FIGS. 5D and 6A-6D. In this example, the width W of the optical fiber was 125 microns.

By determining height H and width W, a radius of curvature of the end face of the optical fiber can be calculated. Referring now to FIG. 4A, FIG. 4A shows how the radius of curvature is calculated geometrically from the experimentally determined core height. Moreover, the graph illustrates the inverse relationship between center to edge height H of the optical fiber and the radius of curvature of the end face of the optical fiber.

Examples 2-5 below illustrate that the control of the laser parameters such as laser fluence, intensity, duty cycle, and exposure time can be used to shape the end face of the optical fiber. In general, at lower laser fluence values, a larger radius of curvature resulted, and by contrast, a smaller radius of curvature was determined at larger laser fluence values as is also illustrated in FIG. 2A.

### Example 2

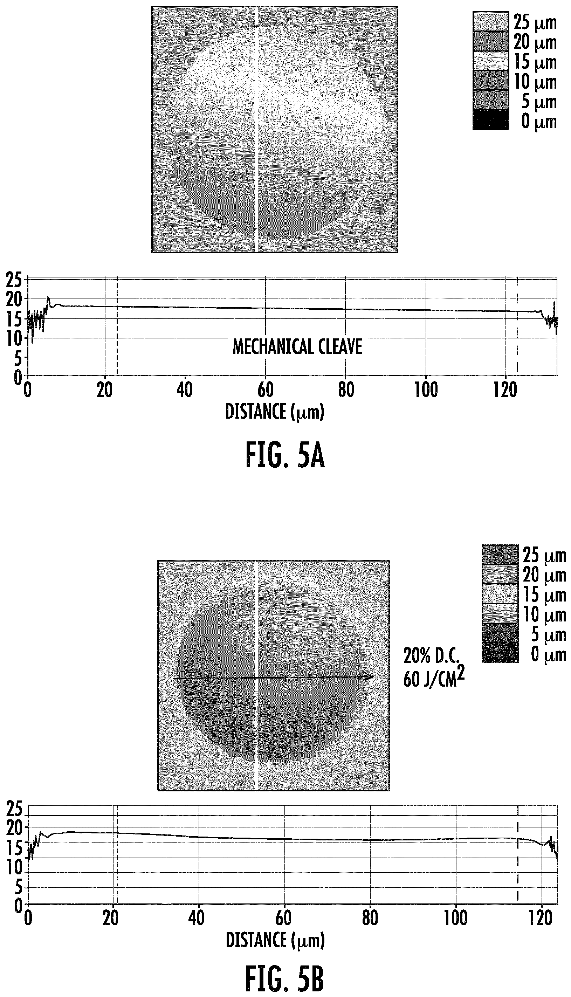

Referring now to FIGS. 5A-5D, various images of treated optical fibers after laser treatment by laser polishing apparatus 100 are shown. In particular, FIG. 5A shows an optical fiber that was cleaved and did not undergo laser polishing treatment by the laser polishing apparatus of the present disclosure. FIGS. 5B-5D show optical fibers that were laser treated by the laser polishing apparatus of the present disclosure with varying duty cycles and laser fluences of the laser beam. In all cases, the exposure time was over several milliseconds.

FIGS. 5B-5D show that by increasing the duty cycle and thereby laser fluence, the core height of the optical fiber increases. Measurements were performed at a fixed cycle time, exposure time, and beam size. At a low laser fluence, the end face shows some melting and flowing under surface tension, but a radius is not yet formed. That is, a rounded end face of the optical fiber did not result, and the end face is flatter. Stated another way, an asymmetrical shape of the end face of the treated optical fiber resulted. As such, the optical fiber was treated by laser beams that operated below the surface tension threshold of the optical fiber. Moreover, the optical fibers of FIGS. 5A-5D exhibit smaller center height to edge height variation as shown (less than 2 microns, about 2 microns, 4 microns, and 9.6 microns for FIGS. 5A-5D, respectively), i.e., smaller height difference between the center of the optical fiber and the edge of the optical fiber.

Referring now to FIGS. 6A-6D, the duty cycle and laser fluence of the laser beam were increased in comparison to FIGS. 5A-5D as described above, and the exposure time was over several milliseconds. FIGS. 6A-6D also show that by increasing the laser fluence and laser duty cycle, the core height of the optical fiber increases. Measurements were performed at a fixed cycle time, exposure time, and beam size. FIGS. 6B-6D show that at a higher laser fluence, the end face of the optical fiber melted and flowed under surface tension, and a radius of curvature or a rounded end face of the optical fiber resulted. Stated another way, a more symmetrical shape of the end face of the treated optical fiber resulted. As such, the optical fiber was treated by laser beams that operated above the surface tension threshold of the optical fiber. Moreover, the optical fibers of FIGS. 6B-6D exhibit greater center height and edge height variation as shown, i.e., greater height difference between the center of the optical fiber and the edge of the optical fiber.

### Example 3

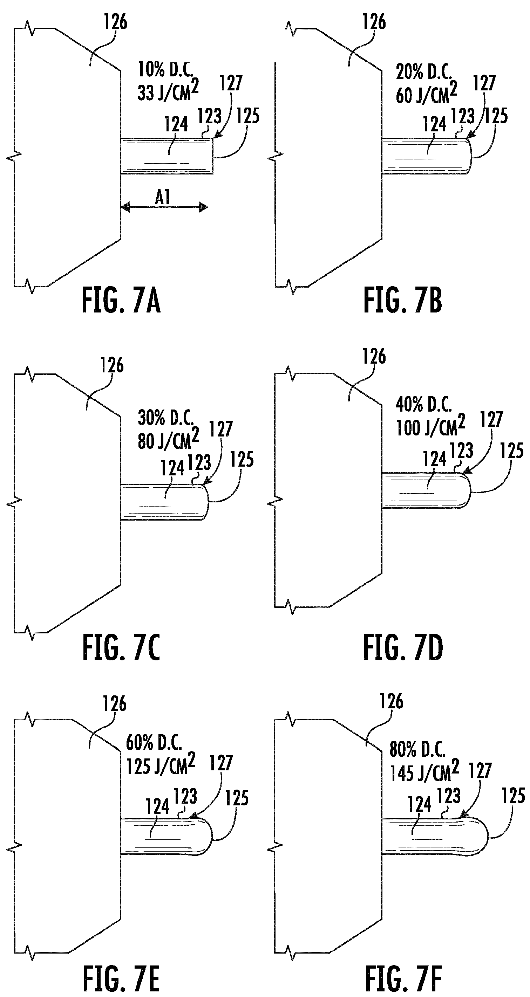

Referring now to FIGS. 7A-7F, various images of the optical fiber after laser treatment are shown. The optical fiber and ferrules were treated by the laser polishing apparatus of the present disclosure where duty cycle and laser fluence were varied as shown. During laser treatment the optical fiber protruded from the ferrule at a distance of about 250 µm to prevent damage to the ferrule due to laser absorption of laser beam(s). As shown in FIGS. 7A-7F, from 80 J/cm² and above (FIGS. 7C-7F), a radius of curvature was produced due to the laser parameters operating above the surface tension threshold as mentioned previously. In addition, the ferrule was not damaged. Moreover, at the highest laser fluence, there is some bulging of the end face as the diameter is increased. As shown, a radius of curvature for the end face of the optical fiber can be produced by laser treatment by the laser polishing apparatus of the present disclosure without ferrule damage or fiber bulging by varying the laser parameters (e.g., laser fluence and duty cycle).

### Example 4

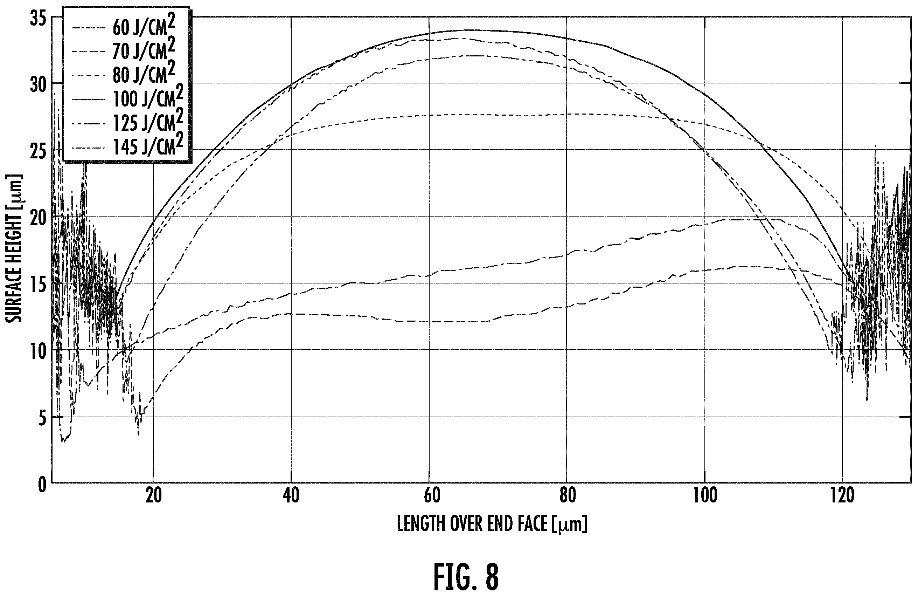

Referring now to FIG. 8, various height profiles of optical fibers are shown. In particular, the height profiles shown are of optical fibers that were treated by the laser polishing apparatus of the present disclosure at varying laser fluences as indicated in FIG. 8. As shown, for optical fibers treated with low laser fluence values, the surrounding cladding is nearly flat with the core, and the radius of curvature is large. As also shown, by increasing laser fluence values, the radius of curvature may then be controlled to achieve the desired shape.

### Example 5

As mentioned previously, Examples 2-5 show that the control of laser parameters such as laser fluence, intensity, duty cycle, and exposure time can be used to shape the end face of the optical fiber.

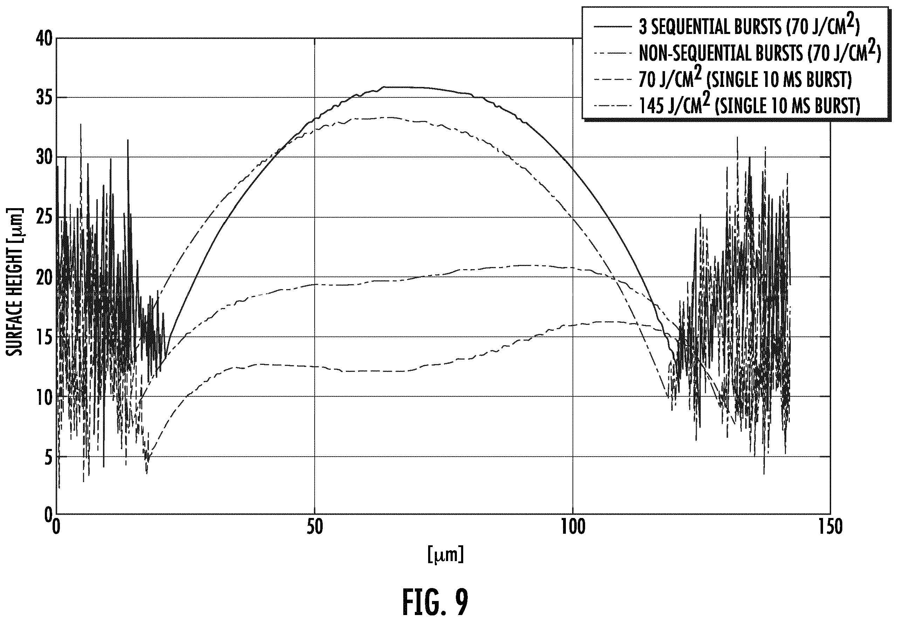

Referring now to FIG. 9, various height profiles of optical fibers are shown that have undergone different laser processing treatment. In particular, the height profiles shown are of optical fibers that were treated by the laser polishing apparatus of the present disclosure at varying laser fluences and laser treatment patterns (e.g., laser pulses, burst widths, burst frequency, etc.) as indicated in FIG. 9.

As mentioned previously, control of the laser parameters (e.g., laser fluence, burst width or frequency) can control the radius or shape of the end face by controlling the exposure time and the overall laser intensity. As shown, at a low laser intensity, melting is dominant over evaporation and the surface tension results in a spherical end face for a long enough exposure time. By contrast, at a high laser intensity, the volume of molten glass of the fiber end face is limited at any given point in time due to the balance between evaporation and thermal conduction and melting. Since rounding is achieved in a short period of time, diffusion of the core up dopants is limited, and because of this, the volume of molten glass is limited thereby, resulting in less mushrooming and less sag or distortion of the fiber end face due to gravity.

Moreover, as shown in FIG. 9, at low laser fluence values (i.e., 70 J/cm²), there was a dip in the height profile for a single 10 ms burst of laser pulses. Repeating the 10 ms burst multiple times to increase the total exposure time while including delays between each burst, shows similar results to a single burst. However, if 3 bursts are applied sequentially without delays for the same total exposure time and the same intensity, the end face becomes smooth and spherical.

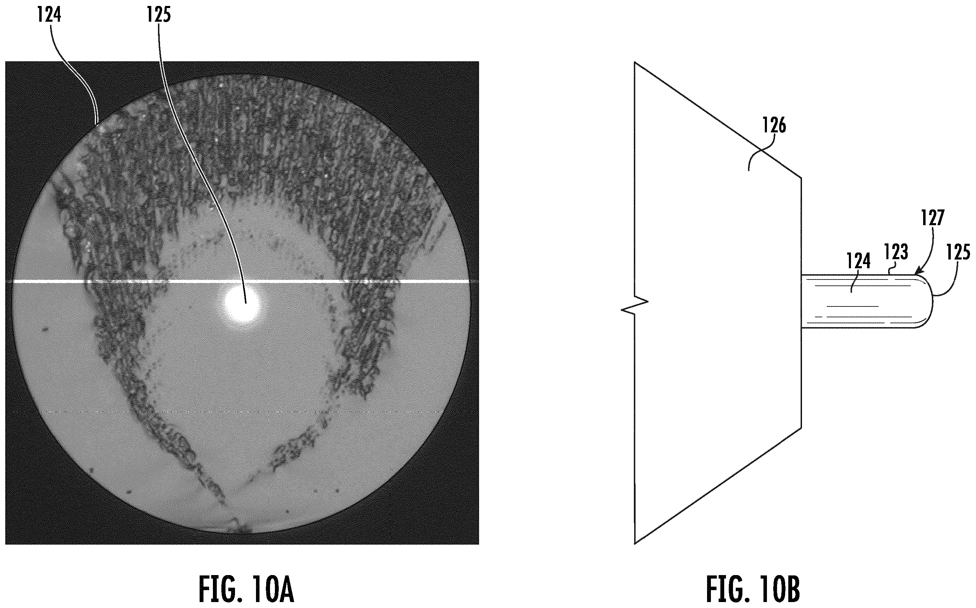

For cleaved surfaces that have imperfections on the end face (or uncleaved optical fibers - where a greater amount of polishing can be required), either low intensity laser beams with long durations can be used or high intensity laser beam with shorter durations, by comparison, can be used. In cases where significant material needs to be removed, in addition to polishing, high intensity (for evaporation) can be used with long durations. An example of polishing on a poor surface is shown in FIGS. 10A and 10B.

Referring now to FIGS. 10A and 10B, an additional application of laser polishing of the present disclosure is illustrated. In particular, FIG. 10A shows an end face which has been damaged or processed by another method (e.g., cleaving). The scratches and grooves shown in FIG. 10A may be removed by sufficient exposure to the laser source of the laser polishing apparatus of the present disclosure. In this Example, the laser beam(s) outputted by the laser has a 10 millisecond burst period pulse width and a laser fluence of about 100 J/cm². Under these parameters, as the laser system produces evaporation at this wavelength, material is vaporized to fully remove the end face damage and leave a smooth and spherical end face. In this Example, evaporation removed about 50 microns of fiber length per laser burst. This is similar to a high quality mechanically cleaved end face thereby, providing an alternative application of the laser polishing apparatus of the present disclosure. In addition, a radius of curvature is also formed as shown in FIG. 10B as a result of the laser treatment by the laser polishing apparatus of the present disclosure.

### Example 6

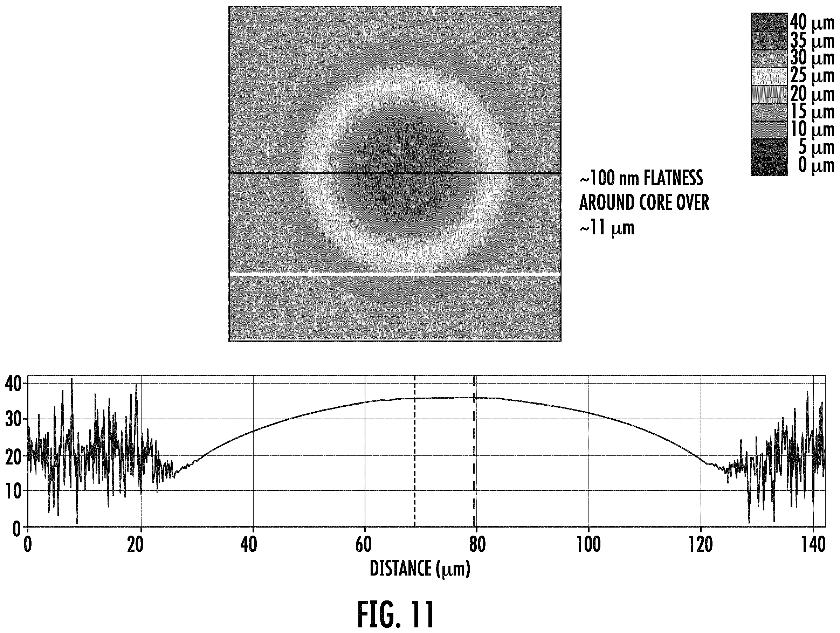

Referring now to FIG. 11, an optical fiber was treated by the laser polishing apparatus of the present disclosure to produce a region near the fiber core with a flatness of a 1% height change over about 11 µm around the core of the optical fiber. The laser and corresponding laser beam(s) had a laser fluence of 70 J/cm² and a 30 millisecond continuous exposure time. In the application of physical contact connectorization, this flatness around the core provides a method to meet connectorization standards while also producing a smooth, spherical, and clean end face.

As shown in Examples 1-5, a controlled change to the laser intensity (fluence and duty cycle) can increase or decrease this region around the core as required for various applications or standards.

There are many other alternatives and variations that will be appreciated by persons skilled in optical connectivity without departing from the scope of the appended claims. For at least this reason, the invention should be construed to include everything within the scope of the appended claims.

## Claims

1. A method of laser polishing an optical fiber (124) having an end face (125), the method comprising:
placing the optical fiber (124) onto a stage (110) within a laser polishing apparatus (100), the laser polishing apparatus (100) comprising:
a laser (102);
a focusing lens (104) having a focus (105); and
a connector (130) comprising the optical fiber (124) and a ferrule (126) housing the optical fiber (124);
protruding the optical fiber (124) from the ferrule (126);
emitting a laser beam (120) from the laser (102) onto the optical fiber (124) to provide a laser treatment onto the end face (125) of the optical fiber (124); and
retracting at least a portion of the optical fiber (124) into the ferrule (126),
wherein the end face (125) of the optical fiber (124) is spaced from the focusing lens (104) by a distance to space the end face (125) from the focus (105) such that the laser beam (120) has a beam diameter, wherein the beam diameter and the optical fiber diameter have a ratio ranging between 1:1 and 10:1;
wherein the laser beam (120) has a laser fluence ranging between 1 J/cm² and 200 J/cm², and a duty cycle ranging between 5% and 95%, and the laser (102) is a CO2 laser with wavelength of 9.3 microns, and the laser (102) has an exposure time ranging between 1 microsecond and 1 second, and
wherein the end face (125) has a radius of curvature ranging between 100 microns and 10 mm after undergoing the laser treatment.

2. The method of claim 1, wherein the laser beam (120) has a laser fluence ranging between 10 J/cm² and 200 J/cm².

3. The method of claims 1 or 2, wherein emitting the laser beam (120) comprises emitting the laser beam (120) in a burst period, wherein the burst period has a frequency ranging between 1 Hz and 200 kHz.

## Patentansprüche

1. Verfahren zum Laserpolieren einer optischen Faser (124) mit einer Stirnfläche (125), wobei das Verfahren Folgendes beinhaltet:
Platzieren der optischen Faser (124) auf einem Tisch (110) innerhalb einer Laserpoliervorrichtung (100), wobei die Laserpoliervorrichtung (100) Folgendes umfasst:
einen Laser (102);
eine Fokussierlinse (104) mit einem Fokus (105); und
einen Verbinder (130), der die optische Faser (124) und eine die optische Faser (124) aufnehmende Ferrule (126) umfasst;
Vorstehenlassen der optischen Faser (124) aus der Ferrule (126);
Emittieren eines Laserstrahls (120) von dem Laser (102) auf die optische Faser (124), um eine Laserbehandlung an der Stirnfläche (125) der optischen Faser (124) durchzuführen, und
Zurückziehen mindestens eines Teils der optischen Faser (124) in die Ferrule (126),
wobei die Stirnfläche (125) der optischen Faser (124) von der Fokussierlinse (104) um eine Distanz beabstandet ist, um die Stirnfläche (125) so vom Fokus (105) zu beabstanden, dass der Laserstrahl (120) einen Strahldurchmesser hat, wobei der Strahldurchmesser und der Durchmesser der optischen Faser ein Verhältnis zwischen 1:1 und 10:1 haben;
wobei der Laserstrahl (120) eine Laserfluenz im Bereich zwischen 1 J/cm² und 200 J/cm² und einen Tastgrad im Bereich zwischen 5 % und 95 % hat und der Laser (102) ein CO2-Laser mit einer Wellenlänge von 9,3 Mikrometern ist und der Laser (102) eine Belichtungszeit im Bereich zwischen 1 Mikrosekunde und 1 Sekunde hat, und
wobei die Stirnfläche (125) nach der Laserbehandlung einen Krümmungsradius im Bereich zwischen 100 Mikrometern und 10 mm hat.

2. Verfahren nach Anspruch 1, wobei der Laserstrahl (120) eine Laserfluenz im Bereich zwischen 10 J/cm² und 200 J/cm² hat.

3. Verfahren nach Anspruch 1 oder 2, wobei das Emittieren des Laserstrahls (120) das Emittieren des Laserstrahls (120) in einer Burst-Periode beinhaltet, wobei die Burst-Periode eine Frequenz im Bereich zwischen 1 Hz und 200 kHz hat.

## Revendications

1. Procédé de polissage laser d'une fibre optique (124) présentant une face d'extrémité (125), le procédé comprenant :
le placement de la fibre optique (124) sur une platine (110) à l'intérieur d'un appareil de polissage laser (100), l'appareil de polissage laser (100) comprenant :
un laser (102) ;
une lentille de mise au point (104) présentant un foyer (105) ; et
un connecteur (130) comprenant la fibre optique (124) et une virole (126) accueillant la fibre optique (124) ;
la traction de la fibre optique (124) pour la faire dépasser de la virole (126) ;
l'émission d'un faisceau laser (124) à partir du laser (102) sur la fibre optique (124) pour assurer un traitement laser sur la face d'extrémité (125) de la fibre optique (124) ; et
la rétraction d'au moins une partie de la fibre optique (124) à l'intérieur de la virole (126),
dans lequel la face d'extrémité (125) de la fibre optique (124) est espacée de la lentille de mise au point (104) par une distance afin d'espacer la face d'extrémité (125) du foyer (105) de telle sorte que le faisceau laser (120) ait un diamètre de faisceau, dans lequel le diamètre de faisceau et le diamètre de la fibre optique ont un rapport compris entre 1:1 et 10:1 ;
dans lequel le faisceau laser (120) a une fluence laser comprise entre 1 J/cm² et 200 J/cm², et un cycle de service compris entre 5 % et 95 %, et le laser (102) est un laser à C0² d'une longueur d'onde de 9,3 microns, et le laser (102) a un temps d'exposition compris entre 1 microseconde et 1 seconde, et
dans lequel la face d'extrémité (125) présente un rayon de courbure compris entre 100 microns et 10 mm après le traitement laser.

2. Procédé selon la revendication 1, dans lequel le faisceau laser (120) a une fluence laser comprise entre 10 J/cm² et 200 J/cm².

3. Procédé selon les revendications 1 ou 2, dans lequel l'émission du faisceau laser (120) comprend l'émission du faisceau laser (120) dans une période de rafale, dans lequel la période de rafale a une fréquence comprise entre 1 Hz et 200 kHz.
